# EUROPEAN PATENT APPLICATION

(11) **EP 1 873 121 A2**
(43) Date of publication of application: **02.01.2008**
(21) Application number: 07012209.8
(22) Date of filing: 21.06.2007
(51) Int. Cl.: C02F 3/34

(54) **Method for reducing the management costs of bio-conditioning plants**

(30) Priority: 28.06.2006 IT mi20061251
(71) Applicant: Eurovix S.R.L., 25046 Cazzago S.M. (BS) (IT)
(72) Inventor: Bonassi, Dario, 25046 Cazzago S.M.(Prov. of Brescia) (IT); Maggioni, Paolo, 24058 Romano Di Lombardia (Prof. of Bergamo) (IT); Costenaro, Sara, 22070 Vertemate Con Minoprio (Prof. of Como) (IT)
(74) Representative: Alagem Modiano, Lara S.

(57) **Abstract**

A method for reducing the management costs of plants for bio-conditioning (for example by using activated sludge, biodiscs, attached biomass or trickling filters) municipal and/or industrial wastewater, wherein the method comprises the step of adding to the wastewater to be treated at least one enzymatic-bacterial bioactivator. The effect of this addition, performed directly during bio-oxidation of the wastewater, entails a series of technical effects, including the reduction of the amount of excess sludge and the reduction of oxygen consumption needed for oxidation itself. The achievement of these and other effects leads to a reduction in energy consumption and overall management costs of the entire biological conditioning process. A practical implementation of the present invention, therefore, might be the obtainment of so-called "white certificates", issued by the Italian national authority for electric power and gas in favor of companies which can propose valid solutions to energy saving.

## Description

The present invention relates to a method for reducing the management costs of plants for the bio-conditioning of municipal and/or industrial wastewater.

The Italian national authority for electric power and gas has recently commenced preparatory activity for the trading of energy efficiency certificates (so-called "white certificates"). This process, which came into force in January 2005, is a form of incentive for businesses to save primary energy (i.e., energy which has not yet been converted). The certificates that are obtained will have a value which is proportional to the achieved reduction in consumption (following certification by an appropriate authority) and may optionally be "sold" to other businesses which instead will have been unable to achieve the goals in terms of energy efficiency improvement set by decree-laws during 2004. This possibility has given a very strong incentive to many businesses belonging to the most disparate sectors to find new and more efficient methods suitable to reduce the energy cost of processes performed in-house.

Among the fields interested in energy saving there is the field of the bio-conditioning of municipal and industrial wastewater (also known as sewage), and this is the particular field into which the present invention falls.

For an activated-sludge conditioning plant of medium to large capacity, which corresponds to 200,000-300,000 equivalent inhabitants, according to data provided in the literature, the percentage distribution of the different components of the running cost is the following (percentage on total cost): sludge disposal 40-50%; electric power 20-30%; personnel 15-25%; reagents 2-4%; maintenance 4-8%, wherein therefore in the total management cost of the plant the cost component related to energy consumption is highly significant percentagewise. A higher incidence of electric power consumption can be observed in the running costs of conditioning plants having a smaller capacity, in view of the absence of some complex steps for sludge stabilization which occur only in larger plants.

For example, in terms of the demand and obtainment of white certificates, it would be therefore desirable to have a method capable of ensuring a management cost saving, especially in terms of energy saving, for providing a process for the biological breakdown of municipal or industrial wastewater. This method might in fact become a source of direct saving for the management of the plant and a source of indirect profit arising from the sale of obtained certificates.

The aim of the present invention is therefore to provide an innovative method for reducing the management costs of plants for the bio-conditioning of municipal and/or industrial wastewater.

Within this aim, an object of the present invention is to provide a method as defined above in which the reduction in management costs comprises at least the reduction of the overall consumption of electric power for the wastewater oxidation and optionally also comprises the reduction in costs for the disposal of the produced excess sludge.

This aim and these and other objects which will become better apparent hereinafter are achieved by a biotechnological method for reducing the management costs of plants for the bio-conditioning of one or more municipal and/or industrial wastewaters, wherein said method comprises the step of adding to the wastewater to be conditioned at least one enzymatic-bacterial bioactivator.

It is understood that any characteristic which is mentioned with reference to just one of the aspects of the invention but can be referred also to other aspects is to be considered equally valid with reference to said other aspects even though it is not repeated explicitly.

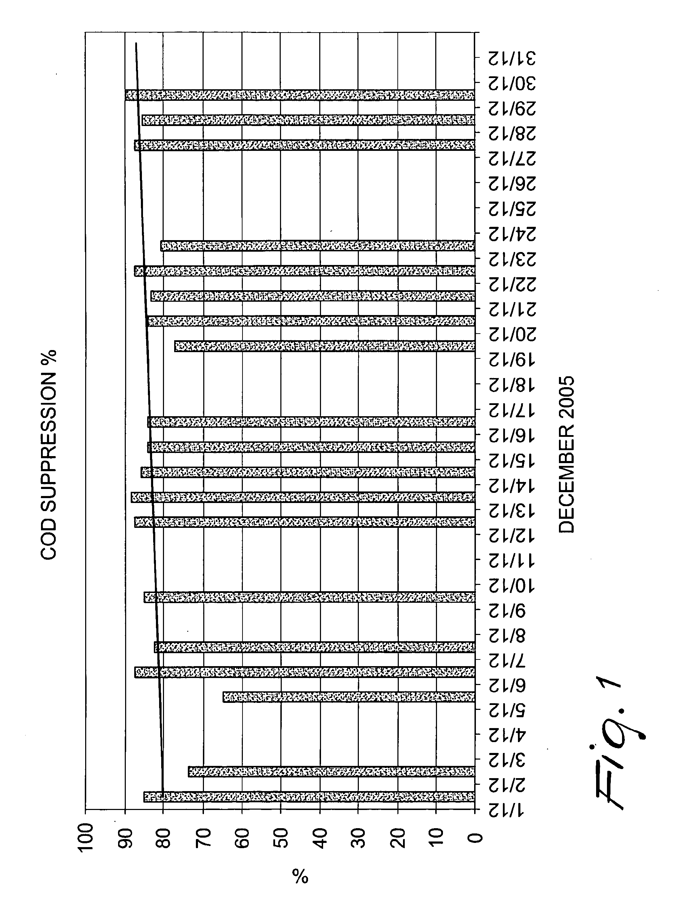

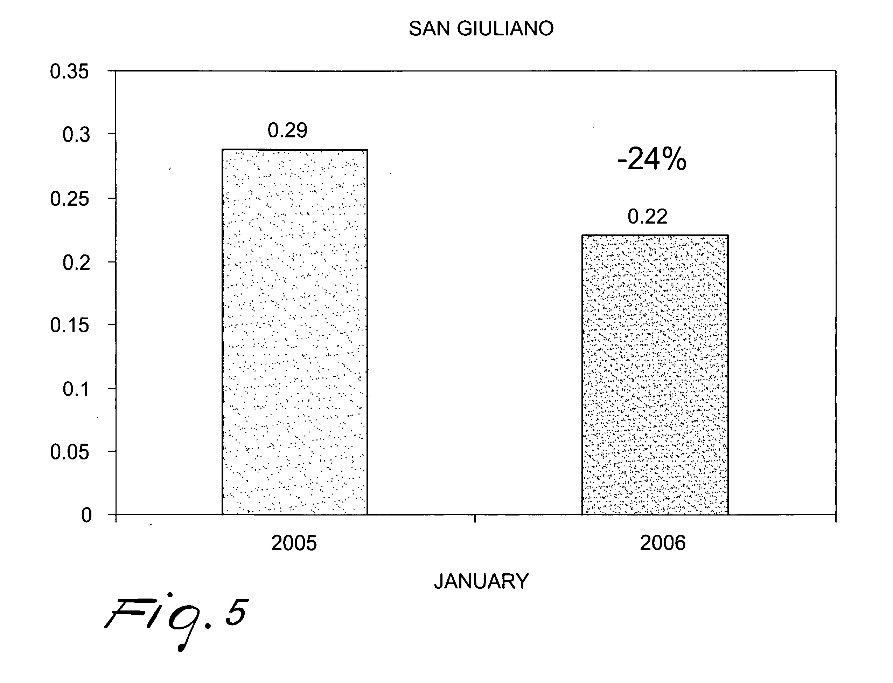

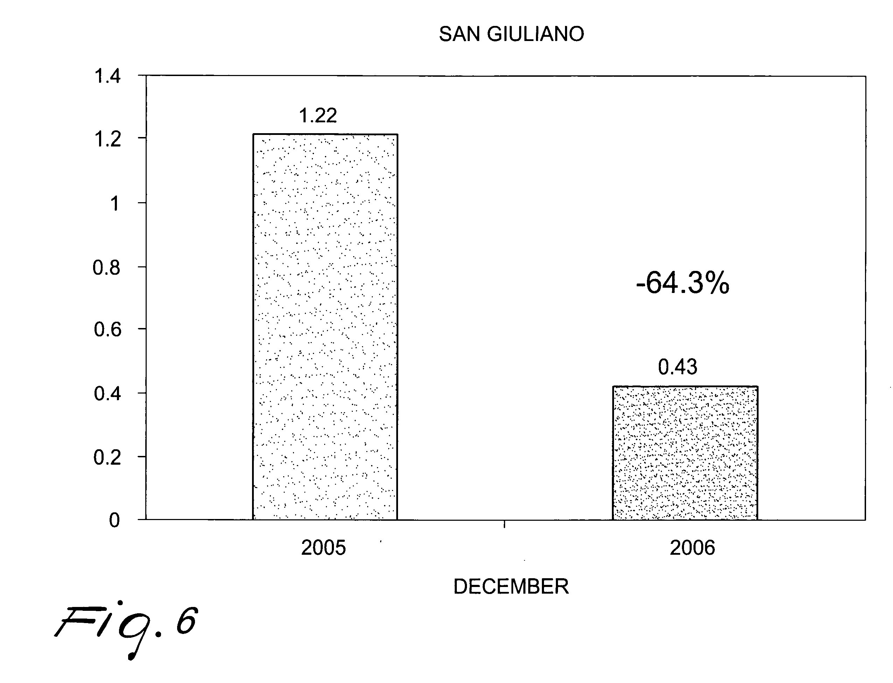

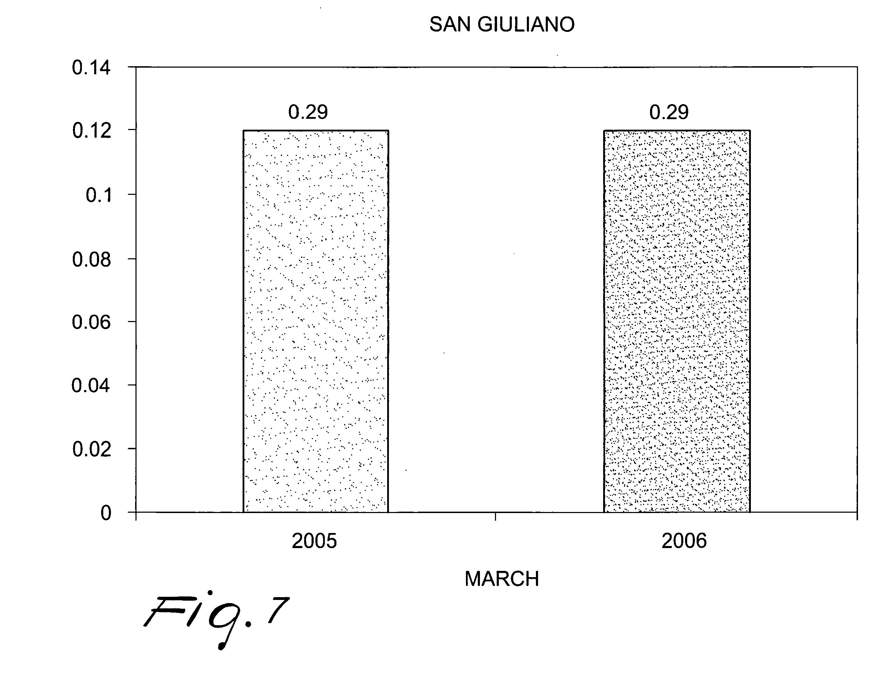

Further characteristics and advantages of the invention will become better apparent from the description of the following Figures 1 to 8, given by way of non-limiting example, wherein:

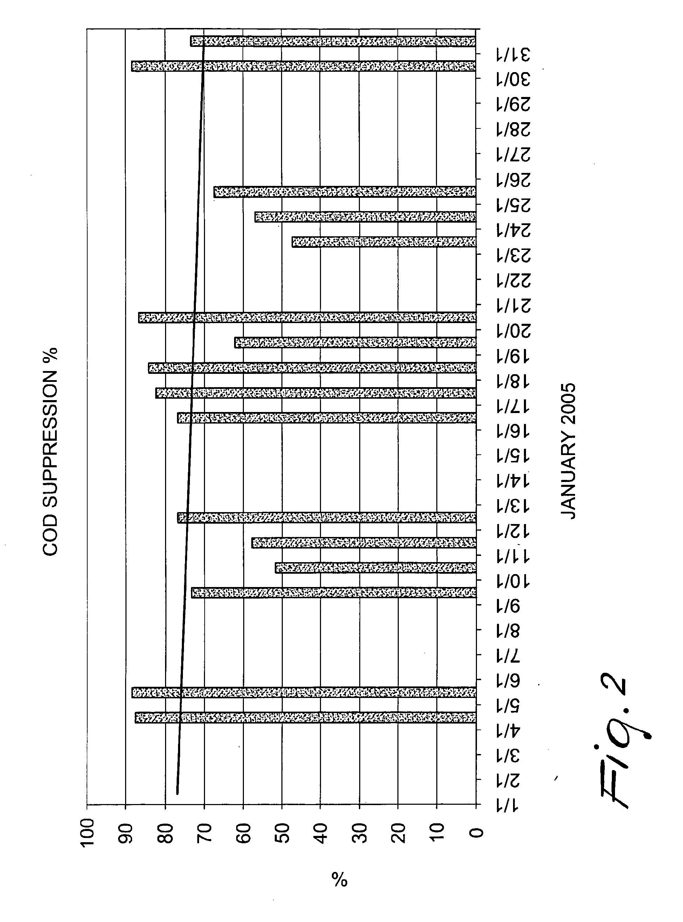

Figures 1 and 2 are two charts which plot the trend of the percentage suppression of COD in an oxidation tank of a plant for the bio-conditioning of a mixed industrial/municipal wastewater, comparing the values obtained by using (Figure 1) or not using (Figure 2) a bioactivator according to the invention. The experimental details are discussed hereinafter in example 1;

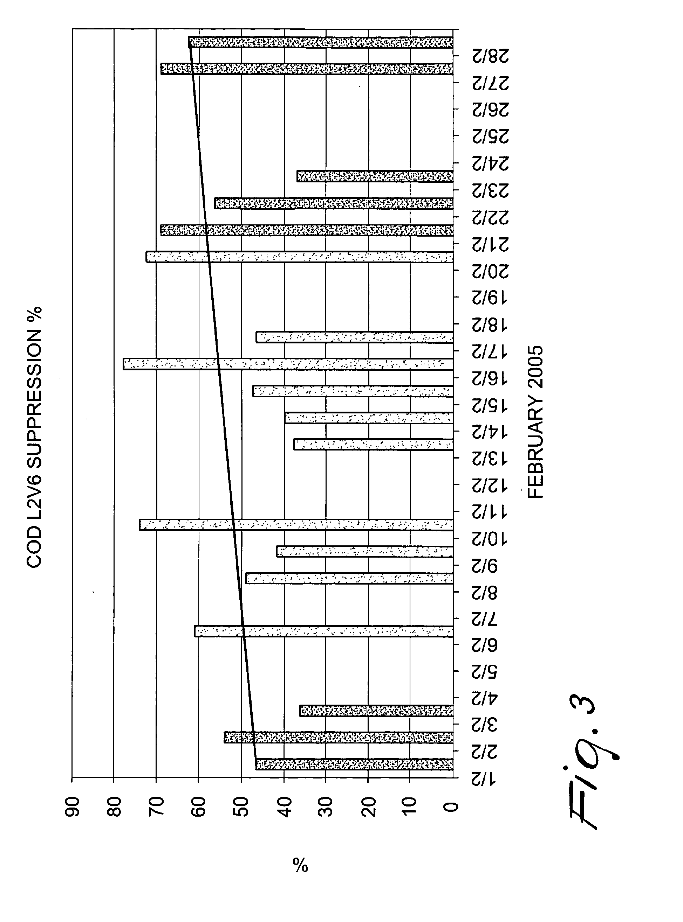

Figure 3 is a chart which plots the percentage suppressions of COD during the treatment and non-treatment period, showing not only the percentage of suppression achieved in the treatment period with respect to non-treatment but also the reduced deviation in the treatment period with respect to the period of interruption of the addition of the enzymatic-bacterial mixture by comparison, ensuring a better management of the plant.

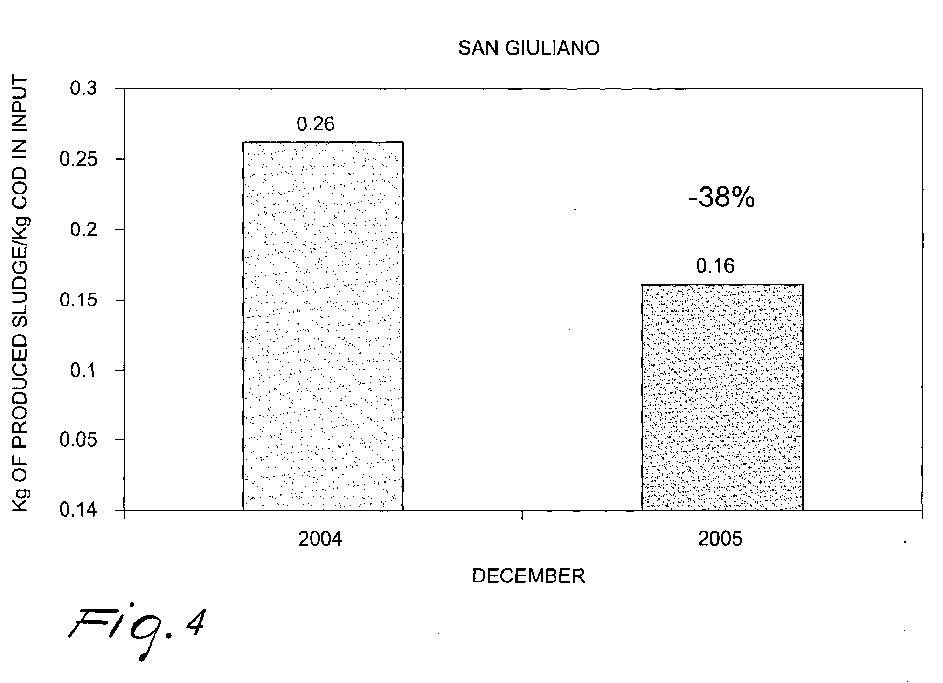

Figures 4 to 8 are charts which plot the trend of the percentage suppression of the production of excess sludge downstream of an oxidation tank of a plant for the bio-conditioning of mixed industrial/municipal wastewater, comparing the results obtained by using or not using a bioactivator according to the invention. The experimental details are discussed hereinafter in example 2.

The expression "management costs" is used to reference the costs arising directly or indirectly from the production and maintenance of biological processes that occur in the context of a process for the bio-conditioning of a municipal and/or industrial wastewater.

The expression "biological processes" references oxidation (hereinafter also referenced as bio-oxidation) of the organic substance that is present in the wastewater by the bacteria used in the plant and the treatment of the sludge after bio-oxidation.

The expression "bio-conditioning plants" references any plant which achieves the conditioning of a wastewater by resorting to micro-organisms. Preferably, this references a plant with activated sludge, with trickling beds or filters, with biodiscs or with attached biomass. For the sake of simplicity, the invention will be described with particular detail regarding only activated-sludge treatment. However, it is understood that the person skilled in the art shall know immediately how to apply the present invention to any other currently known embodiment of bio-conditioning, deriving therefrom the same advantages described with reference to activated-sludge treatment.

The term "sludge" in the invention references both an activated sludge proper and any biomass (in film form or in thicker aggregates) which is meant for bio-oxidation and is present in plants such as trickling filters, biodiscs or with attached biomass.

The processing of wastewater on the part of bio-conditioning plants comprises a number of known steps (for example screening, sand removal, oil removal, primary settling, oxidation, sludge treatment) in which the number and type of steps may vary from plant to plant. However, in any bio-conditioning plant there are necessarily at least one biological oxidation step and one sludge treatment step downstream of the oxidation step (which is optionally divided into sub-steps, such as recirculation of part of the sludge and disposal of the excess sludge).

The reduction in the costs which are associated or associable with the production and maintenance of biological processes as defined above is obtained substantially by means of one or more of the following technical effects achieved by the invention:
a) reduced consumption of oxygen to obtain a given degree of bio-oxidation. In other words, a reduced consumption of oxygen by the bacteria meant for treatment in order to obtain a given value of COD suppression between the wastewater in input to the bio-oxidation step and the wastewater in output;
b) stabilization over time of the bio-oxidation kinetics,
c) reduced production of excess sludge,
d) obtainment after bio-oxidation of more dehydrated sludge,
e) optimization of aerobic and anaerobic stabilization processes of the sludge after bio-oxidation.

Substantially, the better stabilization of the sludge and the better dehydration cause the amount of sludge sent to disposal to decrease.

Preferably, the management costs according to the invention are therefore:
- the consumption of electric power to provide and maintain over time the bio-oxidation on the part of the microorganisms of the biomasses,
- the cost due to the disposal and different treatments that follow sludge oxidation,
- the cost of personnel for managing the conditioning plant,
- the maintenance cost of the conditioning plant, wherein maintenance can consist for example in periodically checking the state of efficiency of the sludge, and
- the cost of the reagents (polyelectrolytes for flocculation, chemicals for facilitating sludge dehydration).

The expression "wastewater bio-conditioning" is used to reference the detoxification and suppression of the organic load (quantified as COD) that is present therein by way of the oxidation of such organic load to mineral and/or volatile components by means of a pool of microorganisms which belong to a sludge (an element which, as mentioned earlier, is part of any bio-conditioning plant). Among these microorganisms, there is a predominance of saprophytic bacteria, while the presence of algae, microfungi, protozoa, nematodes and rotifers is less important. The bacteria that are most present are aerobic heterotrophic and facultative bacteria which belong to different genera: Zooglea, Flavobacterium, Alcaligenes, Aeromonas, Pseudomonas, Bacillus et cetera. Moreover, Nitrosomonas and Nitrobacter are very important and are involved in the nitrogen transformation cycle.

The expression "enzymatic-bacterial bioactivator" references any composition which comprises one or more bacterial components and one or more enzyme components in addition to suitable media, microbial growth factors and nutrients capable of modifying the kinetics of the oxidative biodegradation reactions of the organic load that is present in wastewater due to the microorganisms that are present in the conditioning plant.

A highly preferred enzymatic-bacterial bioactivator is a composition, in the form of an additive, which comprises the following ingredients:
1) a product which can be obtained by fermentation of natural organic substances based on vegetable extracts of soy lecithin and malted barley in an amount from 0.1 % to 10% by weight,
2) carbohydrates in an amount from 0.3% to 30% by weight,
3) amino acids in an amount from 0.1% to 10% by weight,
4) oligopeptides in an amount from 0.1 % to 10% by weight,
5) extracts and derivatives of Macrocystis integrifolia seaweed in an amount from 0.5% to 50% by weight,
6) agar in an amount from 0.1% to 10% by weight,
7) at least one bacterial strain selected from the group that consists of mesophilic bacteria and thermophilic bacteria, both autotrophic and heterotrophic, in an amount from 10³ to 10¹², a concentration expressed as CFU/g,
8) at least one yeast in an amount from 10² to 10¹¹ CFU/g
9) at least one strain of actinomycetes in an amount from 10³ to 10¹⁰ CFU/g,
10) at least one enzyme selected from the group that consists of alpha-amylase, beta-amylase, protease, lipase, lactase, pancrease, pentosanase, glucoamylase, beta-glucanase, cellulase, hemicellulase, pectinase, phosphorylase, pullulanase, peroxidase, polyphenol oxidase, dioxygenase, in an amount from 0.01% to 10% by weight;
11) extracts of *Ascophillum nodosum* seaweed in an amount from 0.5% to 50% by weight;
12) extracts of *Fucus* seaweed in an amount from 0.5% to 10% by weight;
13) extracts of *Laminaria* seaweed in an amount from 0.5% to 10% by weight;
14) mineral biocatalysts based on calcium and magnesium carbonates derived from *Lithothamnium calcareum* seaweed ranging from 0.1% to 10% by weight.

All the ingredients 1) to 14) are per se known and can be obtained with techniques which are standard in the field of biotechnologies.

In the present invention, the effects a) to e) as defined above, first of all the reduction in oxygen consumption to obtain a given degree of bio-oxidation as well as the possibility to stabilize bio-oxidation over time, are due first of all to the ability of a bio-activator as defined here to modify the kinetics of the bio-oxidation reactions (which involve carbon and optionally nitrogen) performed by the sludge.

The expression "modify the kinetics of bio-oxidative reactions" is used to reference substantially an increase and stabilization over time of the reaction kinetics performed by the bacteria that are present in the conditioning plant. The expression "increase the kinetics" is used mainly to reference the achievement of the following effects:
A) achieving a variation in the mutual ratios between the quantities of the main products of a biological oxidation reaction of the organic substances that are present in wastewater. In particular, considering for example that a biological oxidation reaction of organic material which does not contain nitrogen has as its main products carbon dioxide, water and new bacteria, the addition of a bioactivator as described here modifies the kinetics of this reaction in that it causes an increase in the formation of carbon dioxide and water (products the disposal of which has a substantially nil cost), to the detriment of protoplasm growth and therefore of the production of excess sludge;
B) achieving an increase in the oxidation capacity of the microbial component for an equal amount of available oxygen. In particular, the addition of a bioactivator as described here increases and above all stabilizes the sludge bio-oxidation kinetics, because it allows to reduce the amount of oxygen to be provided to the system in order to achieve a given degree of oxidative breakdown and keeps the behavior of the reaction more constant over time. Since one of the main expense items in maintaining a bio-oxidation process is indeed the energy consumption due to the supply of oxygen to the bacteria assigned to conditioning, it can be understood easily that the use of a bio-activator as defined here has therefore surprisingly caused a substantial energy saving;
C) increasing the transfer capacity of the free oxygen from the wastewater to the inside of the bio-oxidizing bacteria.

Stabilization of bio-oxidation over time allows in particular easier management of the plant as a whole, with lower costs for controlling the quality and condition of the bio-oxidizing bacteria (plant maintenance), and of the costs for personnel assigned to the management of said plant.

In a preferred embodiment of the invention, the step of adding an enzymatic-bacterial bio-activator to wastewater to be conditioned consists in placing in contact said bio-activator and said wastewater during the bio-oxidation step, which means for example directly in an oxidation tank in the case of plants which allow this structurally.

The quantity of bio-activator that is dosed can be quantified by way of indication in 20-30 mg/l per day, but it can vary significantly in the doses and times of administration as a function of the characteristics and of the polluting load of the wastewater, as well as of the type of conditioning plant.

The term "wastewater" (or "sewage") preferably references water-based liquid waste which is a result of municipal and/or industrial activities and typically contains organic and inorganic substances in solution and in suspension, at a concentration which is higher than allowed by currently applicable statutory provisions for introducing said wastewater in surface water streams (such as for example rivers, lakes, ponds, the sea) or in underground water streams. Suspended substances can have a variable size ranging from macroscopic to colloidal. The wastewater of the invention, like any other water-based wastewater, can be defined and classified on the basis of certain parameters which are well-known to any person skilled in the art, such as for example:
- suspended solids (SS) and total suspended solids (SStot). The SS coincide with SStot as long as the wastewater has not yet come into contact with the bio-oxidizing microorganisms. After this moment, however, it is possible to define the SS as the solids suspended in the sewage which are available for oxidation and therefore are not bioadsorbed on the sludge, distinguishing them from the SStot, which instead represent the total quantity of suspended solids, which include both the free and oxidizable fraction in the sewage (SS) and the fraction which is bioadsorbed on the sludge and therefore is far less easily oxidizable. The bioadsorbed fraction in fact remains non-oxidized or only partially oxidized and is usually discarded together with the rest of the sludge, constituting part of the excess sludge;
- volatile suspended solids (VSS), which represent the fraction of SStot that bums or vaporizes by heating in air the total suspended solids to 600°C and is constituted substantially by the oxidizable organic substances and by water of crystallization of the inorganic compounds,
- COD (cumulative oxygen demand), which indicates the quantity of oxygen in mg/l or kg/m³ of water required for the complete breakdown of the substances that are present,
- BOD (biochemical oxygen demand), a parameter which indicates the oxygen demand of wastewater to oxidize the degradable organic substances that are present therein by means of aerobic microorganisms.

The expression "activated sludge" references a floccular agglomerate which is usually generated as a consequence of the aeration of wastewater as defined above once it has been placed in contact with a preexisting bacterial population. An activated sludge, like any other sludge according to the invention that is present in different embodiments of bio-conditioning, usually comprises bacteria which are capable of oxidizing the organic load that is present in wastewater, organic and inorganic material which is adsorbed on the sludge and originates from said wastewater, different microorganisms (typically protozoa, metazoa, rotifers, larvae). The bacteria that are present in the sludge break down by oxidation the organic material that is present in the wastewater, converting it into simple substances (CO₂, H₂O and optionally nitrates) and energy, which is used by the bacteria themselves to grow in number (protoplasm growth).

The expression "excess sludge" references the excess suspended biomass which biological plants for treating wastewater produce during their normal operation and is systematically extracted from the production cycle (i.e., not recycled in the oxidation tank).

The present invention (partly) derives not only from fortuitousness but also from studies and observations carried out by the Applicant, which have shown that the demand for electric power during the oxidation step of a bio-conditioning plant is substantially a function of: i) the efficiency of the transfer of oxygen from the surrounding environment to the wastewater (and consequently to the oxidizing bacteria), and ii) the oxygen consumption for biodegradation of the organic substances that are present in the wastewater to be treated.

As shown in table 1 given hereinafter, it has been found that as the concentration of oxygen varies from 1 to 6 mg/l dissolved for example in an activated-sludge tank, different capacities of oxygen transfer from the environment to the wastewater are achieved with the fixed use of 1 kWh (the transfer capacity is expressed as transfer efficiency in kg O₂/kWh):

**Table 1**

| O₂ dissolved at 20°C (mg/1) | kg O₂/kWh |
|---|---|
| 0 | 1.44 |
| 1 | 1.28 |
| 2 | 1.12 |
| 3 | 0.96 |
| 4 | 0.8 |
| 5 | 0.648 |
| 6 | 0.48 |

By working for example with 3 mg/l of dissolved oxygen with respect to 2 mg/l of oxygen, the actual oxygenation capacity decreases, while for an equal amount of transferred oxygen the energy consumption increases (in the conditions of the table, by as much as 15%). The same remarks also apply to other bio-conditioning methods which despite not having activated-sludge tanks have similar structures.

Therefore, on the one hand it would be desirable to be able to maintain a low concentration of dissolved oxygen in the wastewater, since this would lead to higher efficiency of transfer to the wastewater of new oxygen. On the other hand, for an equal capacity of the bacteria to utilize the oxygen available in the wastewater, a higher consumption of oxygen for biodegradation of the organic substances would require a higher concentration of oxygen dissolved in the wastewater (mass law). It can be understood, therefore, that in terms of energy saving (and more generally management saving) it would be desirable to be able to affect not so much, or not only, the efficiency of the transfer of oxygen from the environment to the wastewater but also the efficiency of the bacteria in utilizing the oxygen that is already available, so as to be able to maintain a low concentration of dissolved oxygen without losing bio-oxidation efficiency.

Only mechanical solutions, but no biotechnological solutions, are currently known. For example, it is known that by optimizing the oxidation tank aeration system it is possible to provide fine adjustment of the oxygenation capacity and adapt it as much as possible in periods in which the oxygen demand is lower. Known solutions consist for example in choosing the aeration system to be used by selecting mechanical systems for adjusting the air flow-rate which are constituted by air generation stations with compressors associated with fine bubble diffusers.

However, mechanical solutions such as the one that has just been described only allow to affect the efficiency of the transfer of oxygen from the outside environment to the wastewater, leaving unsolved the problem of the efficiency of bio-oxidation and of the transfer of oxygen from the wastewater to the oxidizing bacteria (an aspect to which reference will be made hereinafter as well).

The present invention differs from what is known first of all because it is biotechnological in nature instead of mechanical. The expression "biotechnological in nature" in fact means that the present invention comprises the use of chemical and biological components (the bioactivators) instead of mechanical structural solutions.

Secondly, the present invention differs from what is known also because it allows to modulate the bio-oxidation efficiency, increasing the kinetics and stabilizing it over time. Since the addition of a bacterial-enzymatic bioactivator modifies the kinetics of the oxidation reaction in the manner discussed above, it has therefore been possible to reduce the energy cost of the bio-oxidation step by optimizing the degradation capacities of the microorganisms that are present in relation to the quantity of oxygen dissolved in the wastewater. In other words, increasing the oxidation efficiency of the microorganisms that are present is like increasing the fraction of oxygen available to said bacteria, accordingly being able to reduce the amount of oxygen actually dissolved in the wastewater.

The fact that the invention affects the biological portion of the plant rather than the structural one makes it clear why it can be applied to any embodiment of a bio-conditioning plant, which regardless of the adoption of specific structural solutions inevitably provides for the presence of a bio-oxidizing bacterial component.

Further observations have shown that maintaining a specific level of conditioning, as a function of the load of sludge and of the search for a correct balance with electric power consumption, also depends on the concentration of suspended solids (SS) of the sludge being aerated. In particular, the amount of oxygen to be supplied for oxidation is higher as the organic load factor decreases, i.e., as the age of the sludge rises (i.e., for activated sludges, the retention time in the aeration step of the organic substances removed from the liquid stream). Moreover, by comparing the ratios between oxidation efficiency, SS load of the sludge and specific oxygen demand (which, as has been shown, can be associated with energy consumption), it has also been found that the higher the SS load of the sludge (i.e., the higher the quantity of SS bioadsorbed on the sludge), the lower the degree of oxidation.

Therefore, a reduction in the load of SS bioflocculated on the sludge in favor of an increase in the fraction of SS free in the wastewater and available for oxidation would have a positive effect on oxidation kinetics and on the energy consumption of this step.

Achieving this goal has turned out to be beyond the reach of conventional mechanical solutions, which are capable of acting only on the adjustment of aeration but not also on biological processes such as efficiency of oxidation, bioflocculation and bioadsorption of the SS on the sludge. On the contrary, the use of an enzymatic-bacterial bioactivator according to the invention has surprisingly proved to have a positive effect also on the ratio between the fraction of SS available for oxidation and the fraction of SS bioadsorbed on the sludge, further increasing the positive effect on the quantity of oxygen required for oxidation, on the oxidation efficiency and on the energy costs correlated thereto.

Although one does not wish to be bound to any particular scientific theory, it is believed that the explanation of the technical effects discussed above is perhaps to be sought in the fact that oxidative breakdown with activated sludge occurs by means of aerobic bacteria which utilize the oxygen of the water as an acceptor for hydrogen, which is removed from the organic material (which is therefore oxidized due to proton loss). Therefore, if the (net) oxidation reaction is represented in qualitative terms as follows:

organic substance + O₂ --> new bacteria + CO₂ + H₂O

the addition of enzymatic-bacterial bioactivators has caused, among others, the following effects:
- hydrolysis and subsequent transition (liquefaction) of part of the suspended solids adsorbed on the sludge to the liquid phase (thus becoming available for oxidation),
- an increase in the efficiency of enzymatic oxidative breakdown processes, with an increase in the formation of CO₂ and H₂O to the detriment of protoplasm growth reactions, and
- an increase in the transfer of the oxygen available in the wastewater at the cellular level, with a reduction of the oxygen not available for oxidation but which is significant in terms of the calculation of dissolved free oxygen.

The enzymatic component of the bio-activator according to the invention does not require an increase in the quantity of oxygen to be administered to the oxidation system, since enzymatic oxidative reactions are biochemical reactions which do not require the addition of external oxygen.

The enzymatic action simplifies the assimilation of the substrate on the part of the microorganisms, placing them in the conditions for working at their best with a reduced energy expenditure and therefore with a reduced oxygen demand.

Besides the energy saving which can be correlated directly to a more efficient and less costly oxidation step, a reduced production of excess sludge has a cascade effect also on all the biological dynamics that follow actual oxidation, producing a gain (which can be shown as a reduced expenditure) for the provision of steps such as stabilization (aerobic and/or anaerobic) of the excess sludge and dehydration of said sludge.

In particular, the task of sludge stabilization is substantially to reduce the volume of the sludge as much as possible (for example by converting part of the bioadsorbed SS into mineral salts and biological gases) so as to make their final disposal less expensive, safer and more efficient. Being able to start from quantities of excess sludge which are lower than conventional ones, in which in particular both the bacterial fraction and the fraction of bioadsorbed SS are reduced, therefore has an effect of reducing management costs also in relation to the stabilization step.

The purpose of dehydration (whether mechanical or natural) of stabilized sludge is substantially to further reduce the weight and mass of the sludge so as to make its disposal less expensive. It can be understood, therefore, that the ability to start from reduced quantities of stabilized sludge has an effect of reducing management costs also in relation to the dehydration step.

To summarize, the use of bioactivators according to the invention, preferably if added to the wastewater and to the previously prepared sludge directly during oxidation, has caused an overall management saving due to the provision of biological dynamics in the context of a bio-conditioning plant.

Further characteristics and advantages of the present invention will become better apparent from the description of the following preferred embodiments, understood merely by way of non-limiting example.

### Example 1

To support of what has been stated, the analysis is proposed here of data obtained in a single wastewater bio-conditioning plant by using enzymatic-bacterial mixtures. This analysis will highlight in particular the results in terms of constancy of COD suppression and significant reduction in the production of sludge expressed as kilograms of sludge produced per kilograms of COD in input. Although the data related to reduction of stabilization and dehydration costs have not been analyzed as well, such advantages are evident to any person skilled in the art starting from the reduction in the production of excess sludge.

The values have been obtained from a mixed plant for the treatment of industrial and civil wastewater with the use of a bioactivator which has the following composition: pool of enzymes and bacteria, carbohydrates, nutrients, amino acids and peptides, microbial growth factors, extracts of Ascophillum, Macrocystis, Fucus, Laminaria algae, mineral biocatalysts in the following quantities: 20 mg per liter of wastewater per day.

Data analysis entailed a comparison between a period of use of the mixtures and a period of non-use. The compared periods are uniform as regards the temperature, so as to eliminate this variable, which has significant effects on biological processes and therefore on the oxidation tank where the bacterial-enzymatic mixture is added. In particular, the months of December 2005 (with the addition of bioactivator) and of January 2006 (without the addition of bioactivator from day 11 to day 24) were compared.

The charts of Figures 1 to 3 clearly show the constancy of the percentage of suppressed COD. The percentage mean values of COD suppression varied from 55% in the period of non-addition to 75% in the period with addition. Moreover, it is also evident that suppression variability is greatly reduced. Standard deviation on the month in fact changed from 12% to 6%, providing a stability of reaction which makes the plant easier to manage.

### Example 2

To support what has been stated, the analysis is proposed here of data obtained in a single wastewater bio-conditioning plant following the use of enzymatic-bacterial mixtures. This analysis clearly shows the results in terms of suppression of the production of excess sludge. In particular, the ratio between kilograms of produced sludge and kilograms of COD in input varies from an average of 1.31 in the period of non-addition to a value of 0.71 in the period of addition, therefore with a reduction of 45.8% which, correlated with the energy consumption related to sludge treatment, provides considerable advantages for plant management.

The values were obtained from a mixed plant (located in San Giuliano, Italy) for the treatment of industrial and civil wastewater with the use of a bioactivator which had the following composition: pool of enzymes and bacteria, carbohydrates, nutrients, amino acids and peptides, microbial growth factors, extracts of Ascophillum, Macrocystis, Fucus, Laminaria algae, mineral biocatalysts in the following quantities: 20 mg per liter of wastewater per day.

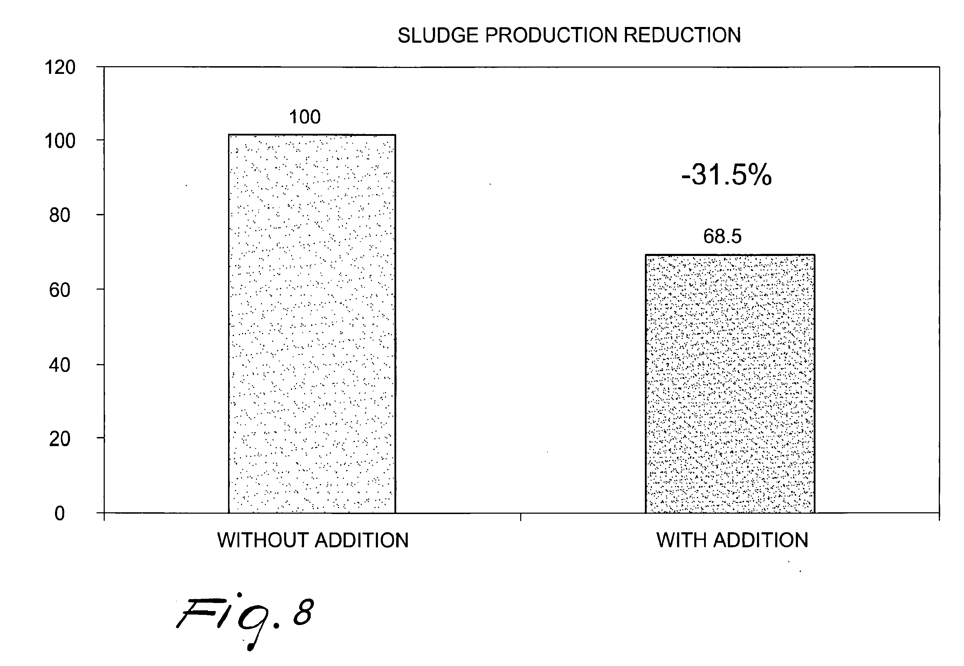

Despite some problems in plant management (mainly due to the fact that suppliers did not ensure the agreed pollutant load and accordingly the processes, especially the biological ones, often performed poorly), by comparing equivalent months of 2004 and 2005 with and without the addition of the mixtures a reduced production of sludge is evident, with a total percentage average reduction of 31.5% (Figure 8). The absence of changes in March is explained by the fact that the increase in temperature and the consequent natural resumption of biological activity mask the effect that the addition of a new pool of enzymes and bacteria can have in the oxidation tank.

Although only some preferred embodiments of the invention have been described in the text, the person skilled in the art will understand immediately that it is in any case possible to obtain other equally advantageous and preferred embodiments.

The disclosures in Italian Patent Application no. MI2006A001251, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A method for reducing the management costs of plants for the bio-conditioning of one or more municipal and/or industrial wastewaters, wherein said method comprises the step of adding to the wastewater to be conditioned at least one enzymatic-bacterial bioactivator.

2. The method according to claim 1, wherein the step of adding to the wastewater to be conditioned at least one enzymatic-bacterial bioactivator consists in placing in contact said bioactivator and said wastewater during the oxidation step.

3. The method according to claim 1, wherein the enzymatic-bacterial bioactivator is a composition, in the form of an additive, which comprises the following ingredients:
1) a product which can be obtained by fermentation of natural organic substances based on vegetable extracts of soy lecithin and malted barley in an amount from 0.1 % to 10% by weight,
2) carbohydrates in an amount from 0.3% to 30% by weight,
3) amino acids in an amount from 0.1% to 10% by weight,
4) oligopeptides in an amount from 0.1 % to 10% by weight,
5) extracts and derivatives of *Macrocystis integrifolia* seaweed in an amount from 0.5% to 50% by weight,
6) agar in an amount from 0.1 % to 10% by weight,
7) at least one bacterial strain selected from the group that consists of mesophilic bacteria and thermophilic bacteria, both autotrophic and heterotrophic, in an amount from 10³ to 10¹² , a concentration expressed as CFU/g,
8) at least one yeast in an amount from 10² to 10¹¹ CFU/g,
9) at least one strain of actinomycetes in an amount from 10³ to 10¹⁰ CFU/g,
10) at least one enzyme selected from the group that consists of alpha-amylase, beta-amylase, protease, lipase, lactase, pancrease, pentosanase, glucoamylase, beta-glucanase, cellulase, hemicellulase, pectinase, phosphorylase, pullulanase, peroxidase, polyphenol oxidase, dioxygenase, in an amount from 0.01% to 10% by weight;
11) extracts of *Ascophillum nodosum* seaweed in an amount from 0.5% to 50% by weight;
12) extracts of *Fucus* seaweed in an amount from 0.5% to 10% by weight;
13) extracts of *Laminaria* seaweed in an amount from 0.5% to 10% by weight;
14) mineral biocatalysts based on calcium and magnesium carbonates derived from *Lithothamnium calcareum* seaweed ranging from 0.1% to 10% by weight.

4. The method according to claim 1, wherein the reduction in management costs comprises obtaining a reduction in the costs linked directly or indirectly to one or more of the following technical effects:
a) reduced consumption of oxygen to obtain a given degree of oxidation;
b) stabilization over time of bio-oxidation kinetics,
c) reduced production of excess sludge,
d) achievement of more dehydrated sludge,
e) optimization of aerobic and anaerobic stabilization processes.

5. The method according to claim 4, wherein the costs associated or associable with technical effects a) to e) are:
- consumption of electric power to provide and maintain over time the bio-oxidation,
- costs due to disposal and treatments of the sludge after oxidation,
- cost of personnel for management of the conditioning plant,
- maintenance cost of the conditioning plant, and
- reagent cost.

6. The method according to claim 4, wherein effects a) to e) are due to the capacity of said enzymatic-bacterial bioactivator to modify the kinetics of bio-oxidation reactions.

7. The method according to one or more of the preceding claims, aimed at obtaining white certificates.

8. The method according to one or more of the preceding claims, wherein bio-conditioning plants are selected among activated-sludge plants, plants with trickling filters, biodisc plants and plants with attached biomass.
